# EUROPEAN PATENT SPECIFICATION

(11) **EP 3 660 379 B1**
(45) Date of publication and mention of the grant of the patent: **27.07.2022**
(21) Application number: 19210266.3
(22) Date of filing: 20.11.2019
(51) Int. Cl.: F16L 25/00, F16L 33/24, F16L 33/28, F16L 11/12

(54) **CONNECTING STRUCTURE OF A MULTILAYER TUBE, PARTICULARLY FOR CHEMICAL AND FOOD-RELATED FLUIDS**
VERBINDUNGSSTRUKTUR EINES MEHRSCHICHTIGEN ROHRES, INSBESONDERE FÜR CHEMISCHE FLÜSSIGKEITEN UND FLÜSSIGKEITEN IM ZUSAMMENHANG MIT LEBENSMITTELN
STUCTURE DE CONNEXION D'UN TUYAU MULTICOUCHE, EN PARTICULIER POUR LES FLUIDES CHIMIQUES ET ALIMENTAIRES

(30) Priority: 28.11.2018 IT 201800010635
(43) Date of publication of application: 03.06.2020
(73) Proprietor: Tubigomma Deregibus S.r.l., 35030 Saccolongo (PD) (IT); FLUOR TUBING B.V., 3542 CH Utrecht (NL)
(72) Inventor: SOETERBROEK, Alexander J.A., 3735 LA BOSCH EN DUIN (NL); DEREGIBUS, Andrea, 35142 PADOVA (IT)
(74) Representative: Modiano, Micaela Nadia

(56) References cited:
- WO-A-2004/099659
- WO-A2-2004/099659
- KR-A- 20110 008 464
- US-A- 2 858 147

## Description

The present invention relates to a connecting structure of a multilayer tube, particularly for chemical and food-related fluids.

Such tubes are used in machines and in other applications where a connecting element is required that is flexible and suitable for contact with products, in particular but not exclusively of the chemical/pharmaceutical type and the like.

They are constituted by an inner layer, a tubular sheath which defines the passage duct of the fluid, and one or more outer layers overlaid on the inner layer and integrated with it.

The inner layer is made of fluorinated polymers, such as FEP, MFA, PFA, PVDF, ECTFE and PTFE and, in particular in the chemical/pharmaceutical industry, is preferably transparent or white.

In general, the outer layers can comprise textile reinforcements, elastomers and metallic or thermoplastic helices for reinforcement and protection which are adapted to improve flexibility and limit the risk of the tube collapsing during its bending.

The outer layers of the sheath are applied in succession based on the requirements dictated by the intended use of the tubes, by winding or braiding or by extrusion and subsequent vulcanization of the tube.

In the market there are two principal flexible tube technologies, which can be differentiated according to the type of adhesion present between the innermost layer constituted by the extruded fluoropolymer sheath and all of the outermost part that covers it.

The first type is a flexible hose made with an extruded sheath, as the first layer, and is subjected externally to a chemical process known as "cementation", the purpose of which is to increase the adhesiveness of the outer surface of the sheath in order to facilitate the adhesion on it of another layer.

The second type is a flexible hose with an extruded sheath, but is not subjected to external cementation. In this case the fluoropolymer sheath is incorporated in the finished structure of the tube, but not with the same capacity for adhesion with the outer layer that a sheath subjected to cementation possesses.

Among the tubes used widely in the sector and belonging to the second type described, there are tubes which comprise an inner layer made of PTFE which is constituted by a tube which is corrugated in a screw-like manner only externally, therefore with a smooth inner surface. Substantially the outer surface has a helical contouring and the inner surface of the covering that covers the inner layer is correspondingly shaped complementarily. The contouring constitutes a helical groove which defines helical peaks and troughs with side walls substantially perpendicular to the longitudinal axis of the tube, and inside which a metallic wire wound in a helix can be accommodated.

These tubes also comprise a reinforcement layer which is constituted by a sleeve of fabric made of metallic or textile material and an outer covering outside the sleeve which is made of elastomeric material or of plastic material and is stuck to the sleeve.

The inner layer, being corrugated, gives greater flexibility to the tube than a smooth inner layer.

The reinforcement layer increases the resistance of the tube to bending, preventing it from collapsing.

Although it has the advantages listed above, such tubes are not devoid of drawbacks.

The installation of the tube presents a not insignificant complexity in a connection with another tube. In fact, in order to connect one tube with another, the installation technician has to cut the tube to the size required and remove the outer layer of covering at the cut end, for a length adapted to the connector that it is desired to install.

The operation to remove the outer layer is often laborious and requires skill on the part of the operator.

In addition, the presence of metallic parts adds a significant weight to the tube and therefore it is difficult to handle during installation and maintenance.

Also, when the tube is cut, the last few turns of the metallic winding tend to detach from the inner layer, exiting from the troughs. Such connecting structures are known from US 2,858,147.

The aim of the present invention is to provide a connecting structure with a connecting portion and a multilayer tube, particularly for chemical and food-related fluids, which can be provided in a simple and rapid manner.

Within this aim, an object of the invention is to provide a connecting portion of a multilayer tube which is highly reliable and of low cost.

A further object of the present invention is to overcome the drawbacks of the known art in an alternative manner to any existing solutions.

This aim and these and other objects which will become better apparent hereinafter are achieved by a connecting portion of a multilayer tube, particularly for chemical and food-related fluids, said multilayer tube comprising, in succession from the inside outward:
- a first layer constituted by a tubular sheath that is externally corrugated in a screw-like manner and which defines the duct for the fluid,
- at least one second layer, which is shaped internally like a female thread and is coupled mechanically to the first layer through the interaction of the threading,
and said connecting portion being characterized in that it comprises:
- a tubular connecting element which is internally and externally threaded and is inserted at a corresponding end between said first layer and said at least one second layer via screwing.

Further characteristics and advantages of the invention will become better apparent from the detailed description that follows of a preferred, but not exclusive, embodiment of the multilayer tube according to the invention, which is illustrated for the purposes of non-limiting example in the accompanying drawings wherein:

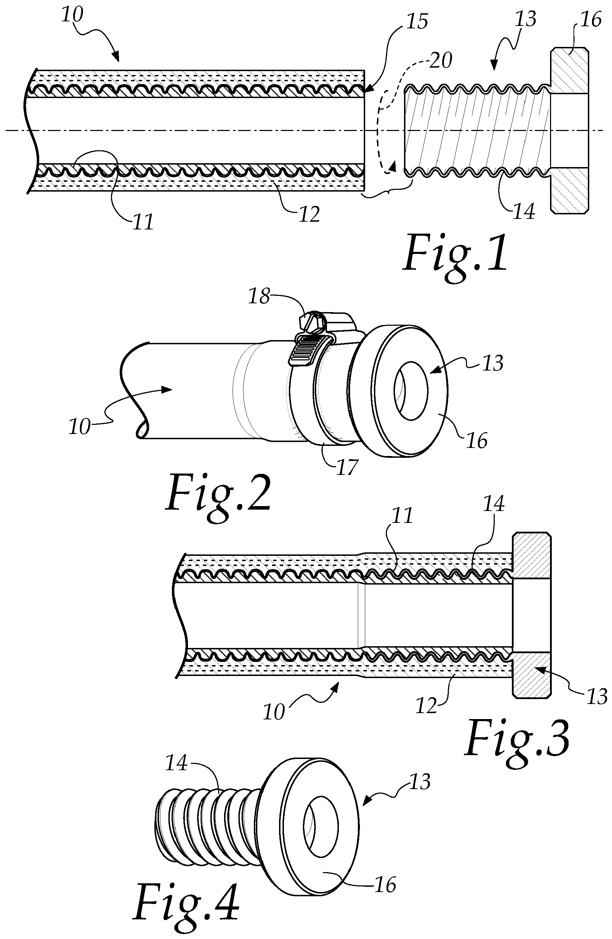

- Figure 1 is a cross-sectional view of a multilayer tube according to the invention before a connector is joined to it;
- Figure 2 shows the multilayer tube with the connector joined to it;
- Figure 3 is a cross-sectional view of the multilayer tube with connector;
- Figure 4 shows a connecting portion according to the invention.

With reference to the figures, a multilayer tube, particularly for chemical and food-related fluids, is generally designated with the reference numeral 10 and comprises, in succession from the inside outward:
- a first layer 11 constituted by a tubular sheath that is externally corrugated in a screw-like manner and which defines the duct for the fluid,
- at least one second layer 12, which is shaped internally like a female thread and is coupled mechanically to the first layer through the interaction of the threading.

A connecting portion 13 according to the invention comprises an internally and externally threaded tubular connecting element 14 which is inserted at a corresponding end 15 between the first layer 11 and the at least one second layer 12 via screwing, in the direction of the arrow 20.

Preferably, the tubular connecting element 14 has an internal threading the length of which is at least equal to the length of the external threading.

The screwing is possible because the first layer 11 is preferably not subjected to surface cementation, or in any case it is not treated in any way in order to facilitate adhesion.

Therefore the first layer 11 does not adhere to the second layer 12, remaining independent of it.

When during the production of the tube the second layer 12 is arranged on the first layer 11, it conforms to the shaping determined by the helical peaks and troughs. In this manner the second layer 12 obtains an internal shaping like a female thread, with which it interfaces with the screw-like outer shaping of the first layer 11, thus obtaining the mechanical union through the interaction of the threadings.

The internally and externally threaded tubular connecting element 14 is inserted between these threadings.

Advantageously, the internally and externally threaded tubular connecting element 14 is metallic.

The internal/external threading can be obtained, for example, by way of rolling.

The tubular connecting element 14 has an end flange 16, for fluid connection, which optionally is provided with a fluid seal, not shown in the figures, in any case preferably market-sourced.

As can clearly be seen in the figures, the end flange 16 abuts against the corresponding end 15 of the multilayer tube 10, which constitutes a retention element thereof.

Advantageously there can be, where deemed necessary, fastening means, such as for example a band 17, which wrap around the at least one second layer 12 which is shaped internally like a female thread in the region in which the internally and externally threaded tubular connecting element 14 is present.

The fastening band 17 can be, for example, of the type commonly found on the market with adjustable fastening, for example by way of rotation of a screw 18.

Such fastening means can, alternatively, be constituted, for example, by a safety clamp, or the like, not shown in the figures.

In variations of embodiment, not according to the invention and not shown in the figures, the user can remove a portion of the second layer 12 and screw the tubular connecting element 14 directly onto the first layer 11.

In practice it has been found that the invention fully achieves the intended aim and objects by providing a connecting portion and a multilayer tube, particularly for chemical and food-related fluids, that is simple and rapid to assemble.

The connecting portion avails of an internally and externally threaded tubular connecting element 14 which can be obtained by simple mechanical machining like the removal of shavings or molding, operations that are highly reliable and of low cost.

The invention thus conceived is susceptible of numerous modifications and variations, all of which are within the scope of the appended claims.

In practice the materials employed, provided they are compatible with the specific use, and the contingent dimensions and shapes, may be any according to requirements and to the state of the art.

This application claims priority from Italian Patent Application No. 102018000010635 .

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connecting structure comprising a multilayer tube (10), particularly for chemical and food-related fluids, and a tubular connecting portion (13), said multilayer tube comprising, in succession from the inside outward:
- a first layer (11) constituted by a tubular sheath that is externally corrugated in a screw-like manner and which defines a duct for the fluid,
- at least one second layer (12), which is shaped internally like a female thread and is coupled mechanically to the first layer through the interaction of the threading,
and said tubular connecting portion (13) comprising:
- a tubular connecting element (14) which is internally and externally threaded and is inserted at a corresponding end (15) between said first layer (11) and said at least one second layer (12) via screwing.

2. The connecting structure according to claim 1, **characterized in that** said tubular connecting element (14) has an internal threading the length of which is at least equal to the length of the external threading.

3. The connecting structure according to one or more of the preceding claims, **characterized in that** said tubular connecting element (14) is metallic.

4. The connecting structure according to one or more of the preceding claims, **characterized in that** said internally and externally threaded tubular element (14) is provided with an end flange (16).

5. The connecting structure according to one or more of the preceding claims, **characterized in that** said end flange (16) abuts against the corresponding end (15) of said multilayer tube (10).

6. The connecting structure according to one or more of the preceding claims, **characterized in that** it has fastening means (17) which wrap around said at least one second layer (12) which is shaped internally like a female thread in the region in which said internally and externally threaded tubular connecting element (14) is present.

## Patentansprüche

1. Verbindungsstruktur, aufweisend ein mehrschichtiges Rohr (10), insbesondere für chemische Fluide und Fluide im Zusammenhang mit Lebensmitteln, und einen rohrförmigen Verbindungsabschnitt (13), wobei das mehrschichtige Rohr nacheinander von innen nach außen Folgendes aufweist:
- eine erste Schicht (11), die durch eine rohrförmige Hülle gebildet ist, die außen in einer schraubenartigen Weise gewellt ist und einen Kanal für das Fluid definiert,
- mindestens eine zweite Schicht (12), die innen wie ein Innengewinde geformt ist und durch die Wechselwirkung des Gewindes mechanisch mit der ersten Schicht gekoppelt ist,
und wobei der rohrförmige Verbindungsabschnitt (13) Folgendes aufweist:
- ein rohrförmiges Verbindungselement (14), das innen und außen mit einem Gewinde versehen ist und an einem entsprechenden Ende (15) zwischen der ersten Schicht (11) und der mindestens einen zweiten Schicht (12) durch Verschrauben eingesetzt wird.

2. Verbindungsstruktur nach Anspruch 1, **dadurch gekennzeichnet, dass** das rohrförmige Verbindungselement (14) ein Innengewinde hat, dessen Länge mindestens gleich der Länge des Außengewindes ist.

3. Verbindungsstruktur nach einem oder mehreren der vorhergehenden Ansprüche, **dadurch gekennzeichnet, dass** das rohrförmige Verbindungselement (14) metallisch ist.

4. Verbindungsstruktur nach einem oder mehreren der vorhergehenden Ansprüche, **dadurch gekennzeichnet, dass** das rohrförmige Element (14) mit Innen- und Außengewinde mit einem Endflansch (16) bereitgestellt ist.

5. Verbindungsstruktur nach einem oder mehreren der vorhergehenden Ansprüche, **dadurch gekennzeichnet, dass** der Endflansch (16) an dem entsprechenden Ende (15) des mehrschichtigen Rohrs (10) anliegt.

6. Verbindungsstruktur nach einem oder mehreren der vorhergehenden Ansprüche, **dadurch gekennzeichnet, dass** sie ein Befestigungsmittel (17) hat, das die mindestens eine zweite Schicht (12) umschlingt, die innen in dem Bereich, in dem das rohrförmige Verbindungselement (14) mit Innen- und Außengewinde vorhanden ist, wie ein Innengewinde geformt ist.

## Revendications

1. Structure de raccordement comprenant un tube multicouche (10), en particulier pour fluides chimiques et alimentaires, et une partie de raccordement tubulaire (13), ledit tube multicouche comprenant, en succession de l'intérieur vers l'extérieur :
- une première couche (11) constituée par une gaine tubulaire qui est striée extérieurement en forme de filetage de vis et qui définit une conduite pour le fluide,
- au moins une deuxième couche (12), dont l'intérieur présente une forme de filetage femelle et qui est accouplée mécaniquement à la première couche grâce à l'interaction des filetages,
et ladite partie de raccordement tubulaire (13) comprenant :
- un élément de raccordement tubulaire (14) qui est fileté intérieurement et extérieurement et est inséré au niveau d'une extrémité correspondante (15) entre ladite première couche (11) et ladite au moins une deuxième couche (12) par vissage.

2. Structure de raccordement selon la revendication 1, **caractérisée en ce que** ledit élément de raccordement tubulaire (14) a un filetage interne dont la longueur est au moins égale à la longueur du filetage externe.

3. Structure de raccordement selon l'une ou plusieurs des revendications précédentes, **caractérisée en ce que** ledit élément de raccordement tubulaire (14) est métallique.

4. Structure de raccordement selon l'une ou plusieurs des revendications précédentes, **caractérisée en ce que** ledit élément tubulaire à filetage interne et externe (14) est pourvu d'une bride d'extrémité (16).

5. Structure de raccordement selon l'une ou plusieurs des revendications précédentes, **caractérisée en ce que** ladite bride d'extrémité (16) prend appui contre l'extrémité correspondante (15) dudit tube multicouche (10).

6. Structure de raccordement selon l'une ou plusieurs des revendications précédentes, **caractérisée en ce qu'**elle comporte un moyen de fixation (17) qui s'enroule autour de ladite au moins une deuxième couche (12) qui présente à l'intérieur une forme de filetage femelle dans la région dans laquelle ledit élément de raccordement tubulaire à filetage interne et externe (14) est présent.
